Europäisches Patentamt

European Patent Office

Office européen des brevets

(19)

(11) Publication number: **0 072 362**
**A2**

# EUROPEAN PATENT APPLICATION

(12)

(21) Application number: **82850164.3**

(22) Date of filing: **29.07.82**

(51) Int. Cl.³: **A 47 B 61/00**

(30) Priority: **05.08.81  SE 8104686**

(43) Date of publication of application: **16.02.83**
**Bulletin 83/7**

(84) Designated Contracting States: **AT BE CH DE FR GB IT LI NL SE**

(71) Applicant: **ELECTRONIC LOCKS SWEDEN AB,**
**Vanadisplan 2, S-113 31 Stockholm (SE)**

(72) Inventor: **Ohlsson, Barth Douglas, Hornsgatan 50,**
**S-117 21 Stockholm (SE)**
Inventor: **Akesson, Sten Lars Olof, Tofsmesvägen 7,**
**S-184 00 Akersberga (SE)**

(74) Representative: **Forssell, Gunilla et al, STURE V**
**MOBERG AB Patentbyra Kungstensgatan 48,**
**S-113 59 Stockholm (SE)**

(54) **A device for overload protection of a locker.**

(57)  Overload protection device of a locker provided with a compartment system including several compartments (1) provided on a rotational frame. The compartments are placed in a casing (2) provided with a least one stationary opening (3), in front of which at control said movable compartments are placeable one at a time for insertion of luggage to be stored or for taking back stored luggage. Each one of the compartments is provided with a spring-suspended base plate (7) at the floor. A sensor (5; 8 to 17) is placed stationary in the vicinity of the stationary opening, which sensor is detecting if the base plate is placed beneath a predetermined level or not in relation to a reference level. If the base plate (7) of a compartment in front of the opening is too low, the signal from the sensor makes the driving mechanism of the locker unable to move the compartment from the opening.

# 0072362

SPECIFICATION

This invention relates to a device for overload protection of a locker provided with a compartment system including several movable compartments placed in a closed casing provided with at least one stationary opening, in front of which at control said movable compartments are placeable one at a time for insertion of luggage to be stored or for taking back stored luggage. When a compartment is placed in front of the opening, the other compartments are hidden in the locker, so that entrance to a compartment for others than service staff only can be made through said opening.

A locker of this kind is described in the UK application No 2 015 326. This kind of locker is often designed as wardrobes placed in cloakrooms in public institutions, such as in hospitals, theatres etc., in order to give a safe place for people to hang up one´s things. A very functional type of a locker of this kind has a rotating compartment system placed in a casing provided with a vertical opening. The width of the opening is adapted to the front width of the compartments. At the side of the opening a control panel including a coin slot is provided.

When a person has hang up his things and sometimes also has put in some goods of other kind he wants to store on the floor of the compartment placed behind the opening, he puts some coins in the slot, and a card having marks on it, which designate the compartment in question, is fed out from the panel to the person. The opening is closed and the compartment system is rotated, so that the compartment just occupied disappears into the casing and a new, empty compartment is placed in front of the opening. The opening is then opened again. Thus, the goods stored in the compartment just occupied is hidden in the casing. Then, when the person wants to take his things out, he places his card in a particular slot. Then, the compartment system is rotated, so that the compartment corresponding to the marks on the card is driven to be placed in front of the opening.

The purpose of the invention is to improve a locker of the kind mentioned above, so that the compartments cannot be used to store goods having a weight above a predetermined limit. For instance it may happen that children will play with the wardrobe and that one child is inserting a coin into the coin slot while another child stands in the compartment placed in front of the opening. Then, under no circumstances may the compartment system be able start to rotate, so that the child in the compartment comes into the closed casing without any possiblility to come out.

A protection against overload is provided in accordance with the invention in that every compartment has a spring-suspended plate; that a sensor is placed stationary in the vicinity of the stationary opening, which sensor is detecting if the base plate is placed below a predetermined level or not in relation to a reference level; and in that the out put of the sensor is controlling a driving mechanism at least for the compartment placed in front of the opening such that the driving mechanism is unable to move the compartment from the opening, if the sensor is detecting that the spring-suspended base plate is placed beneath the predetermined level.

By providing every compartment with a spring-loaded bottom and detecting that the bottom is not placed below a predetermined level in relation to a reference part and having an alarm function, which exerts an influence on the drive mechanism of the compartment system, so that the drive motor does not start if there is an overload, and which possibly also starts an audible or optical alarm, a satisfying security against overload is provided. It is to be noted that each compartment is not provided with an individual sensor but that the system is provided with only one sensor placed in the vicinity of the opening cooperating with a movable part of the compartment, so that the sensor is detecting the level of the movable base plate only of the compartment placed in front of the opening.

Further features and advantages of the invention will be apparent from the following description of the preferred embodiments and variants shown in the drawings in which:

FIG. 1 shows an embodiment of a locker, for which the device in accordance with the invention is intended to be used;

FIG. 2 shows a first embodiment of the device in accordance with the invention; and

FIG. 3 shows a second embodiment of the device in accordance with the invention.

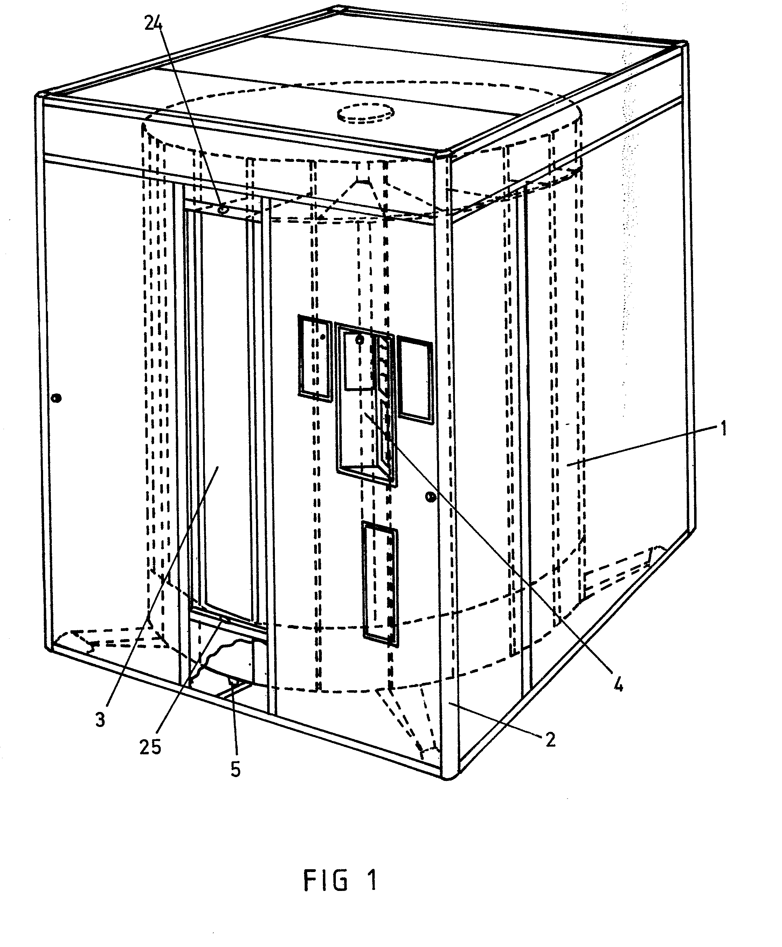

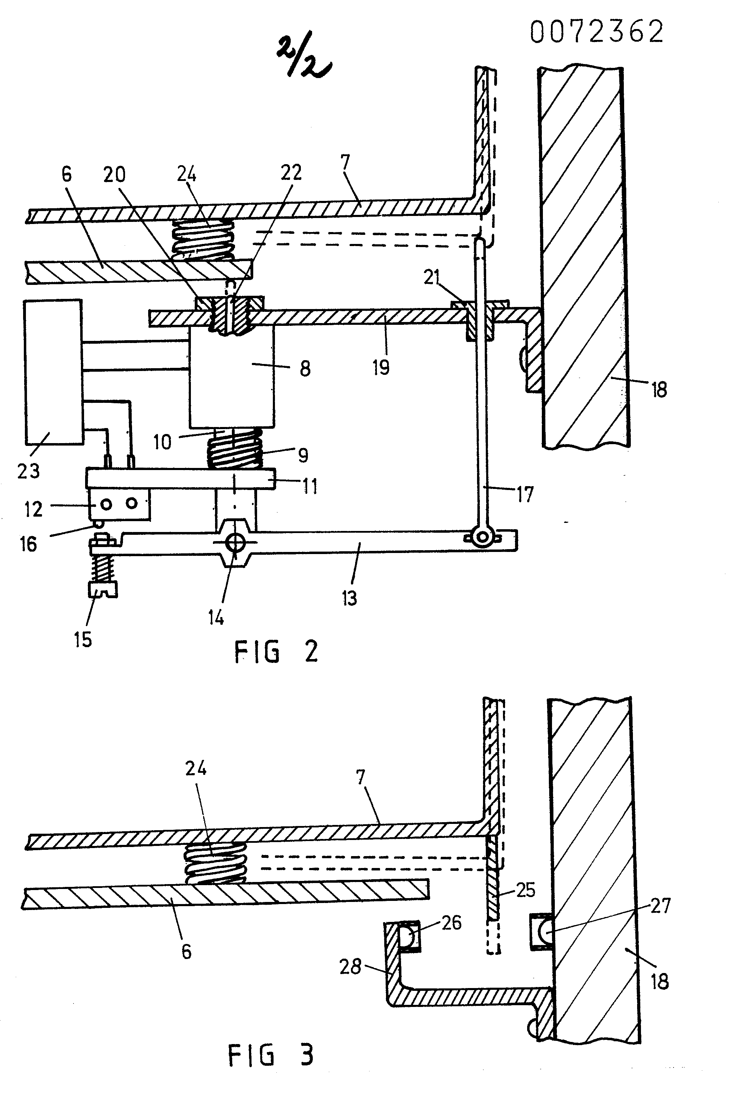

A locker designed as a wardrobe is shown in FIG. 1. The locker comprises a rotating compartment system 1, hereinafter referred to as a rotor. The rotor 1 is placed in a casing 2, which is closed except that it has a vertical opening 3 at the middle of one of its side walls. The width of the opening corresponds substantially to the width of the front side of the compartments in the rotor. A compartment is shown in front of the opening 3. At the side of the opening a control panel 4 is located provided with a coin slot and suitable control devices for the locker. Beneath the compartment in front of the opening a sensor 5 is located. Two embodiments of sensors will be described in relation to the description of FIGURES 2 and 3.

A first embodiment of the sensor 5 indicated in FIG. 1 is shown in detail in a larger scale in FIG. 2 together with the floor of a compartment placed above the sensor. The compartment is provided with a first base plate 6 integral with the compartment. Above this plate a spring-suspended base plate 7 is provided, which in its front part is projecting outwardly in front of the first base plate, so that the spring-suspended base plate 7 can be reached from below through an opening in the compartment in front of the first base plate 6. The base plate 7 is shown in dashed lines in a position, which it would take, when a heavy object, the weight of which exceeds the allowed value, is placed on it, and it is shown in continuous lines in a position, which it takes when no object or a light object is placed upon it.

The spring-suspended base plate 7 may be detachable, so that it can be taken out for cleaning or the like and may be placed on compression springs 24 placed on the first base plate 6.

The sensor 5 is placed below the base of the compartment. In the embodiment shown in FIG. 2 it contains an electromagnetic unit 8 provided with a ferromagnetic core 10 biased by a spring 9 to protrude downwardly from the unit. The unit 8 has a winding (not shown), which, when fed with a current having a sufficiently high current intensity, draws the core into its winding part against the spring bias. A laterally extending plate 11 is attached to the core 10 beneath the unit 8. One part of the spring 9 is resting on the plate 11. A small switch 12, for instance a microswitch, is attached to the plate 11 on its part facing downwardly a short distance from the core 10.

A substantially horisontal, double-armed lever 13 is pivotally attached to the outer end of the core 10 below the plate 11. The lever 13 is normally held in its horisontal position by a spring bias (not shown) provided at the axis of rotation. At the end on one of the arms of the lever 13 a set screw 15 is provided just below the operating device 16 of the switch 12. A long sensing arm 17 is pivotally attached to the end of the other arm of the lever 13. The unit 8 has a fixed position in relation to the sidewall 18 of the casing 2 on a level below the opening 3.

In the embodiment shown in FIG. 2 this is accomplished by having the unit 8 attached to an angle bar 19 attached to the wall 18 with pins or screws. The unit is screwed on the bar 19 with a nut 20. The arm 17 is guided through a bushing 21 provided in an opening in the bar. The bushing is made of a material having a very low coefficient of friction, so that there will be a low friction between the arm 17 and the bushing.

A pin 22 is attached to the upper part of the core 10. Normally, this pin has its upper part located within the unit, but it will extend upwardly from the unit 8 when current is fed through the winding and the core 10 is drawn into the unit 8. In FIG. 2 it is shown that the unit is placed beneath the compartment so that the pin 22 is located below the first base plate 6 integral with the compartment. The arm 17 is located below the spring-suspended base plate 7 a distance away in horizontal direction from the first base plate 6.

A suitable time after that the compartment in front of the opening 3 has been occupied and just before the rotor shall be rotated to put an empty compartment in front of the opening 3, a current pulse is fed by the control circuit 23 of the locker through the winding of the unit 8. This current pulse can be fed through the winding right after the user has inserted the payment in the coin slot.

Alternatively, an optical indicator 24, 25 of a kind known per se may be provided in the opening 3. This indicator indicates when something is passing through the opening. A predetermined time after indication from the indicator 24, 25 the control circuit 23 starts to feed a current through the winding and ends the feeding just before the rotor shall be rotated or when an overload is detected, in which case the control circuit prevents the driving device for the rotor from starting, and also audibly and/or visibly draws the user's attention to the fact that the stored goods is too heavy.

When current is fed through the winding, the core 10 is drawn into the unit 8 until the pin 22 is knocked against the base plate 6. The arm 17 goes the same distance parallel to the core 10. If the spring-suspended base plate 7 is not loaded the sensor will take the position indicated in FIG. 2, but if it is weighted down such as is shown in dashed lines, for instance by an object having a weight exceeding 10 kilograms, the upper end of the arm 17 will be knocked against the plate 7. The lever 13 will then be rotated, so that the set screw 15 gets into touch with the operating device 16 of the switch 12. The switch is closed and the rotor control circuit 23 gets an indication of the existance of an overload.

The embodiment of FIG. 2 is very suitable when the rotor is journalled in bearings in such a way that the floors of the compartments may not have the same level for all the compartments around the rotor. This may be the case when the rotor is journalled in bearings only at its lower end.

However, when the rotor 1 is journalled in bearings both at its upper and lower end then an embodiment provided with an optical indicator is preferred of the kind which is shown in FIG. 3, because it is cheap and has no moving parts. Like in the embodiment of FIG. 2 the base of the compartment is provided with a base plate 6 integral with the compartment and a spring-suspended base plate 7 located above the base plate 6 and projecting a short distance outwardly in front of the plate 6 towards the opening. The plate 7 is placed on some compression springs 24 between the base plates. At its front side the base plate 7 is provided with a shield 25 projecting downwardly a short distance below the level of the plate 6.

The plate 7 with the shield 25 is shown in continuous lines in the position it will take when no overload is placed on it and in dashed lines in the position it will take when an unallowably heavy object is placed upon it. Two parts of an optical indicator 26, 27 is fixedly mounted on the front wall 18 of the casing such that the shield will pass between them and cut the light beam between them, when an overload is placed on the plate 7. The optical indicator includes a shielded light source 26 and a shielded light detector 27 in a way known per se. The detector is placed on the wall 18 and the light source is placed facing the detector a distance out from the wall on an angle bar 28 attached on the wall 18 with nuts or screws.

It is to be noted that FIGURES 2 and 3 only show preferred embodiments of the invention and that the sensor 5 can be made in many different ways. The floors of the compartments do not necessarily have to be provided with double base plates 6 and 7, even if this is a very simple way of solving the problem of having the base plate 7 spring-suspended.

The essential property of the invention lies in the joint action between the compartments of the locker, the control system and the weight indicating device. It will be understood that other practical modifications may be made within the scope of invention.

WE CLAIM:

1. A device for overload protection of a locker (1,2) including
a compartment system (1) including several movable compartments;
a closed casing (2) provided with at least one stationary opening (3) and placed around said compartment system;
a controllable driving mechanism that by control places one of said compartments of said compartment system in front of said opening for insertion of luggage to be stored or for taking back stored luggage;
wherein
every compartment is provided with a spring-suspended base plate (7);
a sensor (5;8,9;26,27) is placed stationary in the vicinity of said stationary opening, which sensor is detecting if said base plate is placed beneath a predetermined level or not in relation to a reference level; and
the output of said sensor is controlling said driving mechanism at least for said compartment placed in front of said opening such that said driving mechanism is unable to move said compartment from said opening, if said sensor is detecting that said spring-suspended base plate is placed beneath said predetermined level.

2. A device according to claim 2, wherein said spring-suspended base plate (7) is resting on compression springs (24) placed on a second base plate (6) integral with said compartment, and that the level on a part of said second base plate is said reference level.

3. A device according to claim 1, wherein said sensor includes an electromagnetic unit (8) having a winding and a spring biased ferromagnetic (10) core placed near a part having said reference level and so that normally no portion of said core is put into contact with said part and so that said spring bias of said core is acting to move said core away from said part, and that at sensing operation a current is fed through said winding in order to move said core against the action of said spring bias until said core or a portion of it is resting against said part, and that said core is connected to an arm (17) located to cooperate with said spring-suspended plate and moving side by side of said core, and a switch (16) cooperating with said arm such that it is operated to switch, if said arm comes into mechanical contact with said spring-suspended plate (7).

4. A device according to claim 1, wherein said sensor (5) normally is inactivated and that a control circuit (23) is provided to activate said sensor a predetermined time before the driving mechanism is operated to move said compartment from said opening (3) and to keep it activated at least to the beginning of the movement of said compartment or until inactivation of said driving mechanism caused by a control signal from said sensor.

5. A device according to claim 4, wherein an indicator (24, 25) is provided at said opening in said casing indicating when something is passing through said opening (3) and feeding a signal to said control circuit at indication, and that said control circuit is activating said sensor a predetermined time after an indication signal from said indicator.

6. A device according to claim 1, charaterized in that said sensor is an optical sensor (26,27) including a light source and a light detector facing each other and located a distance apart from each other, and that said spring-suspended plate (7) is provided with a shield (25), which is moved to brake the light path between said light source and said detector when an overload is placed on said spring-suspended plate.

FIG 1

2/2

0072362

FIG 2

FIG 3